Europäisches Patentamt

European Patent Office

Office européen des brevets

(11) Veröffentlichungsnummer: **0 514 841 A2**

## (12) EUROPÄISCHE PATENTANMELDUNG

(21) Anmeldenummer: **92108442.2**

(22) Anmeldetag: **19.05.92**

(51) Int. Cl.5: **C04B 38/02**

(30) Priorität: **23.05.91 DE 4116732**

(43) Veröffentlichungstag der Anmeldung:
**25.11.92 Patentblatt 92/48**

(84) Benannte Vertragsstaaten:
**CH DE DK FR GB LI SE**

(71) Anmelder: **ABB PATENT GmbH**
**Kallstadter Strasse 1**
**W-6800 Mannheim 31(DE)**

(72) Erfinder: **Rohr, Franz Josef, Dr.**
**Forstweg 2**
**W-6941 Abtsteinach(DE)**
Erfinder: **Reich, Andreas**
**Alstadter Strasse 55**
**W-6900 Heidelberg(DE)**

(74) Vertreter: **Rupprecht, Klaus, Dipl.-Ing. et al**
**c/o ABB Patent GmbH, Postfach 10 03 51**
**W-6800 Mannheim 1(DE)**

(54) **Verfahren zur Herstellung poröser Keramikteile.**

(57) Die Erfindung bezieht sich auf ein Verfahren zur Herstellung poröser Keramikteile durch Kalzinierung und Sinterung, wobei zur Vereinfachung des Verfahrens und zur Verbesserung der Porosität und mechanischen Festigkeit der Keramikteile eine Ausgangspulvermischung mit wenigstens einer nichtoxidischen unter Gasbildung zersetzbaren Komponente verwendet wird und eine einmalige Erwärmung bis auf Sintertemperatur sowohl zur Durchführung der Kalzinierung unter Porenbildung als auch die Sinterung durchgeführt wird. Poröse Keramikteile werden beispielsweise zur Herstellung von Brennstoffzellenanordnungen benötigt.

EP 0 514 841 A2

Die Erfindung bezieht sich auf ein Verfahren zur Herstellung poröser Keramikteile wie z.B. Platten, Rohre oder andere Formteile. Solche Formteile werden z.B. für Brennstoffzellenanordnungen benötigt, die in der DE-OS 39 07 485 beschrieben sind.

Die übliche Herstellung poröser und somit gasdurchlässiger Formteile erfolgt nach einem Verfahren, das von einem kalzinierten Ausgangspulver, z.B. kalziniertes $ZrO_2$/CaO ausgeht. Dieses Ausgangspulver wird mit einem gesonderten Kalzinierungsprozeß vorgefertigt, z.B. aus $ZrO_2$ und CaO und durch Temperaturbehandlung bei etwa 1000°C. Das Kalzinierungsprodukt wird gemahlen mit Porenbildnern, d.h. mit organischen Zusätzen vermischt, nach einem Formgebungsprozeß, z.B. Pressen oder Extrudieren, unter Ausbrennen bzw. Austreiben der Porenbildner gesintert. Die Herstellung der Formteile erfordert somit insgesamt zwei Misch- bzw. Mahlvorgänge und zwei Hochtemperaturprozesse. Trotz dieses Aufwandes ist das Maß der erreichbaren Porosität eng begrenzt, da im Hinblick auf die mechanische Festigkeit die Möglichkeit des Zusatzes von Porenbildnern begrenzt ist.

In den Druckschriften DE-AS 19 11 386 und DE-AS 17 96 034 sind Verfahren beschrieben zur Herstellung von kristallisiertem Zirkonoxid in Form eines Pulvers sowie Verfahren zur Herstellung von Formteilen, z.B. feuerfesten Steinen unter Verwendung dieses Pulvers.

Zur Herstellung des Zirkonoxidpulvers mit phasenstabiler Kristallstruktur wird von einer Pulvermischung aus Zirkonoxid und Kalziumoxid oder einer sonstigen oxidbildenden Verbindung ausgegangen. Die Mischung wird bei hoher Temperatur zur Reaktion gebracht, wobei eine neue Verbindung entsteht, die phasenstabil ist; im Fall einer Ausgangsmischung $x \cdot ZrO_2 + y \cdot CaCO_3$ entsteht $(ZrO_2)$ x $(CaO)$y. Nach diesem Kalzinierungsprozeß wird das hergestellte Material zu Pulver einer gewünschten Körnung gemahlen.

Das so hergestellte stabilisierte Zirkonoxidpulver kann unter Zusatz eines Bindemittels zu Formteilen verarbeitet werden, die anschließend gesintert werden. Dabei entstehen aber keine porösen Formteile oder gar Formteile mit einer definierten Porosität. Nach der Pulverherstellung existieren nämlich keine Porenbildner, wie z.B. Carbonate, Hydroxide oder Oxalate mehr. Während des Sintervorgangs steht somit kein Treibgas, wie Kohlendioxid oder wasserdampf zur Porenbildung zur Verfügung.

Ein Verfahren zur Herstellung poröser Keramikkörper ist in DE-PS 28 15 713 beschrieben. Es wird dort vorgeschlagen, Zirkoniumhydroxid als porenbildender Zusatz zu einem Ansatz aus pulverförmigem Keramikmaterial, das Zirkoniumdioxid enthält, zu verwenden. Auch dieses Verfahren geht von calciniertem keramischem Pulver (Yttriumoxid-stabilisiertes Zirkoniumdioxid) aus, so daß insgesamt zwei Erwärmungsprozesse erforderlich sind, um gesinterte poröse Keramikkörper herzustellen. Außerdem lassen sich nicht für alle Anwendungen geeignete Keramikkörper mit homogener und definierter Porosität herstellen, da sich die durch Wasserabspaltung hervorgerufene Porenbildung über einen größeren Temperaturbereich erstreckt. Sie findet hauptsächlich in einem unteren Temperaturbereich statt, in dem sich das Gefüge des Sinterkörpers noch nicht ausgebildet hat.

Davon ausgehend liegt der Erfindung die Aufgabe zugrunde, ein verbessertes Verfahren zur Herstellung poröser Keramikteile anzugeben.

Diese Aufgabe wird gelöst durch ein Verfahren zur Herstellung poröser Keramikteile in nachstehenden Verfahrensschritten:

a) Herstellung des Ansatzes aus keramischem Pulver und Bindemitteln unter Verwendung einer Pulvermischung, die unstabilisertes $ZrO_2$ oder $Zr(CO_3)_2$ und eine nichtoxidische, unter Gasbildung zersetzbare und für $ZrO_2$ stabilisierend wirkende Verbindung, z.B. Kalziumkarbonat, enthält;

b) Formung der Keramikteile unter Verwendung des vorgenannten Ansatzes;

c) einmalige Erwärmung der Keramikteile bis auf Sintertemperatur, wobei während der Aufheizung eine Kalzinierung unter Porenbildung und schließlich die Sinterung erfolgt.

Das erfindungsgemäße Verfahren hat den Vorteil, daß nur ein Hochtemperaturprozeß erforderlich ist, und daß durch parameteränderung die Porenbildung in weiten Grenzen den jeweiligen Erfordernissen angepaßt werden kann. Vorteilhafte Ausgestaltungen sind nachstehend in der Beschreibung eines Ausführungsbeispiels und in weiteren Patentansprüchen angegeben.

Beim erfindungsgemäßen Verfahren wird die Kalzinierung bzw. Stabilisierung und Sinterung durch einmalige Erwärmung durchgeführt, indem zunächst auf 1000°C erhitzt und ohne oder mit Haltepause weiter auf die Sintertemperatur von etwa 1400°C bis 1600°C aufgeheizt wird. Die Bildung von Poren während des Kalzinierens und Sinterns wird dadurch erreicht, daß mindestens einer der Ausgangsstoffe nicht als Oxid, sondern als Karbonat oder eine andere unter Gasbildung zersetzbare Verbindung eingesetzt wird. Im Falle von $(ZrO_2)_{1-x}(CaO)_x$ wird als Ausgangsstoff $ZrO_2$ und $CaCO_3$ oder $Zr(CO_3)_2$ und $CaCO_3$ verwendet, die beim Erhitzen zu $(ZrO_2)_{1-x}(CaO)_x$ kalzinieren und dabei unter $CO_2$-Gasentwicklung Poren bilden. Diese bleiben auch beim anschließenden Sintern der Keramik erhalten. Soweit zur Formgebung organische Zusätze als Preß- oder Extrusionshilfsmittel (z.B. Polyalkohole) erforderlich sind, tragen diese durch die beim Ausbrennen bewirkte Gasentwicklung zusätzlich zur Porenbildung bei. Das Verfahren wird nachstehend anhand eines konkreten Beispiels mit kalziumstäbilisiertem Zirkonoxid noch näher erläutert: Eine poröse Platte oder ein poröses Rohr, dessen Formgebung durch Extrusion erfolgt, wird in der Weise gefertigt, daß zunächst die Ausgangspulver $ZrO_2$ und $CaCO_3$ mit der gewünschten Korngröße, z.B. 1 bis 10 $\mu m$ und Stöchiometrie, z.B. $x = 0,15$, in einem Pulvermischer gemischt und dann unter Zusatz organischer Extrusions-Hilfsmittel, z.B. Äthylenglykol und Methylzellulose und Wasser in einem Kneter zu einer plastischen, extrudierbaren Masse verarbeitet werden. Die Formgebung dieser Masse zu Platten, Rohren oder Formkörpern mit Kanal oder Wabenstruktur erfolgt in einem Extruder mit dem entsprechenden Mundstück für die gewünschte Form.

Nach dem Extrudieren werden die Formkörper auf bekannte Weise vorgetrocknet, z.B. in einem Warmluftkanal, und dann in einem geeigneten Ofen mit einer Aufheizgeschwindigkeit von 1 bis 2 Grad pro Minute auf die erforderliche Sintertemperatur von z.B. 1550°C im Falle $ZrO_2$/CaO aufgeheizt. Dabei findet im Temperaturbereich unterhalb 800°C das Verdampfen, Zersetzen und Ausbrennen der für das Extrudieren zugesetzten Hilfsmittel, z.B. Wasser, Äthylenglykol und Methylzellulose statt. Im Temperaturbereich um 1000°C erfolgt die Kalzinierung von $ZrO_2$ und $CaO_3$ unter Bildung von $(ZrO_2)_{0,85}(CaO)_{0,15}$. Dabei entsteht gasförmiges $CO_2$. das beim Entweichen Poren bildet. In gleicher Weise werden beim Zersetzen und Ausbrennen der zugesetzten Extrusionshilfsmittel durch die entweichenden gasförmigen Reaktionsprodukte Poren gebildet. Die beim Ausbrennen und Kalzinieren gebildeten Poren bleiben auch während des Sintervorgangs erhalten, der im wesentlichen zwischen 1300 und 1550°C stattfindet. Zur Vervollständigung des Sinterprozesses und zur Erlangung einer ausreichenden mechanischen Festigkeit der Formkörper wird mehrere Stunden (z.B. 3 bis maximal 10 Stunden) bei der maximalen Sintertemperatur von 1550°C verharrt und dann mit einer Abkühlgeschwindigkeit von 3 bis 5 Grad pro Minute auf Raumtemperatur abgekühlt.

Zur Einstellung der gewünschten Porosität können folgende Parameter variiert werden: die Korngröße der Ausgangspulver. z.B. $ZrO_2$-Pulver mit einheitlicher oder unterschiedlicher Korngröße. d.h. Feinkorn mit Grobkorn gemischt; die Menge an Porenbildnern bei der Kalzinierung z.B. das $CaCO_3$/CaO-Verhältnis oder das $Zr(CO_3)_2$/-$ZrO_2$- oder $ZrO_2$/$CaCO_3$-Verhältnis; die Menge an Porenbildnern bei der Ausbrennphase, z.B. Zusätze an Extrusions- oder Preßhilfsmittel, wie Äthylenglykol, Methylzellulose und falls erforderlich kann ein Zusatz von anderen Porenbildnern, z.B. Polyalkohol oder Carbowachs erfolgen.

## Patentansprüche

1. Verfahren zur Herstellung poröser Keramikteile, wobei ein Ansatz aus keramischem Pulver und Bindemitteln hergestellt und daraus Keramikteile geformt und gesintert werden, in nachstehenden Verfahrensschritten:
   a) Herstellung des Ansatzes aus keramischem Pulver und Bindemitteln unter Verwendung einer Pulvermischung, die unstabilisiertes $ZrO_2$ oder $Zr(CO_3)_2$ und eine nichtoxidische, unter Gasbildung zersetzbare und für $ZrO_2$ stabilisierend wirkende Verbindung, z.B. Kalziumkarbonat, enthält;
   b) Formung der Keramikteile unter Verwendung des vorgenannten Ansatzes;
   c) einmalige Erwärmung der Keramikteile bis auf Sintertemperatur, wobei während der Aufheizung eine Kalzinierung unter Porenbildung und schließlich die Sinterung erfolgt.

2. Verfahren nach Anspruch 1, dadurch gekennzeichnet, daß als unter Gasbildung zersetzbare Verbindung $CaCO_3$ verwendet wird.

3. Verfahren nach Anspruch 2, dadurch gekennzeichnet, daß zur Herstellung von keramischen Körpern aus $(ZrO_2)_{0,85}(CaO)_{0,15}$ eine Pulvermischung aus $ZrO_2$ und $CaCO_3$ oder aus $Zr(CO_3)_2$ und $CaCO_3$ eingesetzt wird, wobei die einheitliche oder unterschiedliche Konrgröße im Bereiche 1 bis 10 $\mu m$ liegt.

4. Verfahren nach Anspruch 2 oder 3 zur Herstellung extrudierter keramischer Formkörper, gekennzeichnet durch nachstehende Verfahrensschritte:
   a) Herstellung einer Pulvermischung mit den Ausgangspulvern $ZrO_2$ und $CaCO_3$ in einem Pulvermischer,
   b) Bearbeitung der Pulvermischung unter Zusatz organischer Extrusionsmittel, z.B. Äthylenglykol und Methylzellulose und Wasser in einem Kneter zu einer plastischen extrudierbaren Masse,
   c) Formgebung der Masse in einem Extruder,
   d) Vortrocknung der so hergestellten Formkörper, z.B. in einem Warmluftkanal,
   e) Aufheizung der Formkörper in einem Ofen mit einer Aufheizgeschwindigkeit von 1 bis 2 Grad pro Minute auf eine Sintertemperatur von etwa 1550°C und halten der Sintertemperatur während etwa 3 bis 10 Stunden und
   f) Abkühlen der Formkörper auf Raumtemperatur mit einer Abkühlgeschwindigkeit von etwa 3 bis 5 Grad pro Minute.